# EUROPEAN PATENT SPECIFICATION

(11) **EP 2 993 409 B1**
(45) Date of publication and mention of the grant of the patent: **21.06.2017**
(21) Application number: 14183283.2
(22) Date of filing: 02.09.2014
(51) Int. Cl.: F24C 7/08, A47J 37/00, H05B 6/64, A47J 37/12, H05B 1/02

(54) **Method and temperature control arrangement for electrical heating of a food, method for controlling a household appliance and household appliance**
Verfahren und Temperatursteueranordnung zum elektrischen Aufwärmen eines Nahrungsmittels, Verfahren zur Steuerung eines Haushaltsgerätes und Haushaltsgerät
Procédé et dispositif de régulation de température pour le chauffage électrique d'un aliment, procédé pour commander un appareil électroménager et appareil électroménager

(43) Date of publication of application: 09.03.2016
(73) Proprietor: Electrolux Appliances Aktiebolag, 105 45 Stockholm (SE)
(72) Inventor: SCHIRMER, Stefan, 91541 Rothenburg ob der Tauber (DE); JUNKERSFELD, Markus, 91541 Rothenburg ob der Tauber (DE)
(74) Representative: Electrolux Group Patents

(56) References cited:
- EP-A1- 2 110 605
- EP-A2- 2 042 809
- US-A- 4 447 693
- US-A1- 2008 213 449

## Description

In recent times, the awareness has increased that resources are limited. Increasing oil and electricity prices motivate the consumer to buy energy-saving devices. Concerning household appliances, such as kitchen appliances, energy can be predominantly saved in such devices where electrical heating is used. Usually, electrical heating accounts for more energy consumption than powering engines and pumps. To stay market-competitive, it becomes more and more important for the manufacturers of kitchen appliances to offer household appliances that consume less energy. Energy can thus be saved with appliances, such as kitchen ovens that per se consume high power, e.g. a kitchen oven with various heating elements can easily account for 3 kW.

Document DE 40 29 181 A1, "Heating of Ovens", discloses to use all heating elements during a first heat-up phase to bring an oven to a set temperature using the maximum available heating capacity. Further then, in a second phase, a duty cycle is maintained that corresponds to a temperature to be maintained. In case the temperature reaches a lower temperature threshold, the maximum heating power is switched on again.

Document EP 2110605 A1, "Cooking Method", is about improving cooking results when starting from an ambient temperature. The solution proposes to manage different duty cycles for upper and lower heating elements. As it has been found out that food may burn during the first heat-up phase when using all heating elements at maximum power, a food detection is proposed based on a heat-up delay that is measured, which causes the pre-heat process not to be applied.

In document US 2008/213449 a device for heating food is disclosed that includes a housing and a plurality of heated shelves or trays supported on the housing. Each tray includes a heater and a temperature sensor. The heater is operable to heat the tray and the temperature sensor is capable of sensing the temperature of the tray. A controller is coupled to each heater and each temperature sensor, and the controller is configured to operate the heater as a function of the tray temperature. Different predetermined duty cycles may be switched.

In document EP 2110605 a cooking method is disclosed, which accordingly provides optimized cooking results when starting the cooking process at ambient temperature and that is applicable to the majority of the food categories. It discusses to estimate the power delivered to the food.

In document US 4447693 a Method and apparatus for controlling the food cooking time in a microprocessor controlled microwave oven in response to the remotely sensed condition of the food being heated is disclosed. The average food temperature is constantly derived during cooking, utilizing user entered data on the food category, the food's initial mass, and the measured input power to the magnetron. The average current and average peak voltage input to the magnetron are sensed and the absorbed power in the food is derived using the magnetron efficiency. The user may select the final food temperature within the range from "rare" to "well done" and cooking continues until the desired final temperature is reached.

The invention is based on the problem to improve the power efficiency of a kitchen oven.

This problem is solved by the invention by a temperature control arrangement according to claim 1 and a method for electrical heating of food according to claim 11, which then are applied in a household appliance according to claim 14 and a method for controlling a household appliance according to claim 19. Further developments of the invention are given in the dependent claims.

Advantageously, according to an embodiment of the temperature control arrangement according to the present invention, control mechanisms are combined during heating, a thermostatic control of the temperature range to be maintained as well as a duty cycle power control which provides a duty cycle independence of a load to be heated are used. In this manner, only the amount of power is provided that is actually needed to heat the food amount present in the oven, respectively maintain it at a certain cooking temperature. On the other hand, temperature control is still thermostatically maintained in case the oven door is opened or for other reasons the duty cycle power control leads to an underrun, respectively overshooting of a desired temperature optimum for cooking.

Beneficially, the temperature control arrangement according to this embodiment of the present invention works with plural heating elements by multi-cycle power control; and beneficially in the case of controlling plural heating elements allowing to individually switch the heating elements and control the power of the heating elements being switched on in dependency of the food load determined or entered as well as the power required for heating the food to the food preparation temperature.

Favorably, according to a further development of an embodiment of the arrangement according to the present invention, the food mass can be entered by a food mass input means in order to be able to appropriately determine the duty cycle that is required to heat the corresponding food mass.

Beneficially, according to a further development of an embodiment of the arrangement according to the present invention, the food mass input means is constructed in the form of a scale. Favorably, such an implementation relieves the operator from the duty to manually input the food mass, and instead automatically determines the weight of the food inside of the oven, which can then be used by the duty cycle power control to determine the appropriate duty cycle.

Advantageously, such a scale can be integrated within the oven and be operated in an initial phase when the oven is started to determine the weight of the food in order to determine the load present in the oven.

Beneficially, according to a further development of an embodiment of the arrangement according to the present invention, it comprises means for evaluating the thermal inertia of the food to be heated in order to be able to determine the load inside of the oven. Such a means beneficially allows it to automatically determine the load with minimum additional devices/ components required; and in particular allows it to automate the cooking or baking process as much as possible while requiring a minimum of user intervention.

Advantageously, according to a further development of an embodiment of the arrangement according to the present invention, a control power value is determined in dependency of the food mass/thermal inertia. In this manner, beneficially, the duty cycle power control or the multi-cycle power control can be directly instructed to adapt the proper duty cycle corresponding to the load inside of the oven without requiring additional measures.

Advantageously, according to a further development of an embodiment of the arrangement according to the present invention, a control power value corresponds to the food mass/thermal inertia in a way that it is dependent in a mathematical function, e.g. proportional or inverse proportional to the load, respectively food mass.

Preferably, according to a further development of an embodiment of the arrangement according to the present invention, a thermometer and a clock are provided in order to determine a temperature-over-time behavior as a measure to determine the thermal inertia. In this manner, a minimum installation is required in order to deliver proper results and automatic control of the duty cycle corresponding to the load inside of the oven for the duty cycle power control.

Favorably, according to a further development of an embodiment of the arrangement according to the present invention, an inclination angle of a temperature-over-time linear slope is determined as a measure for the temperature-over-time behavior. Such an angle can be beneficially used as a parameter to determine a proper control power value for the duty cycle power control or the multi-cycle power control.

Favorably, according to a further development of an embodiment of the arrangement according to the present invention, the load evaluation unit is adapted to provide a lower power value for a larger inclination angle. In an easy fashion, the control power value can be determined in a correct way, and if the oven heats faster, this will lead to a larger inclination angle and thus be indicative of a lower food mass.

Beneficially, according to a further development of an embodiment of the arrangement according to the present invention, the load evaluation unit is adapted to set a 100% duty cycle once an inclination angle is determined that corresponds to a 3 kg food mass corresponding to a respective load inside of the oven. Usually, it has been found that from such a mass onward, the full heating power is required in order to keep the appropriate temperature inside the oven.

Advantageously, an embodiment of the method according to the present invention provides for a power-efficient heating and cooking of the food while using temperature control and subsequently duty cycle power control or multi-cycle power control depending on the load of the food to be heated, while on the other hand controlling the temperature range to be maintained by the multi-cycle power control. In this manner, power is only used as required by the load in the oven, while at the same time a temperature band suitable for optimal cooking or baking of the food can be maintained. On the other hand, the number of devices/installations required in the oven is kept at a minimum increasing the reliability of the oven.

The method for the electrical heating of food according to this embodiment the present invention is beneficially suitable to operate with plural heating elements by multi-cycle power control for plural heating elements. Beneficially, plural control possibilities are provided in either switching the number of heating elements and controlling the duty cycle of the respective heating elements as well in dependency of the food mass and the predetermined food preparation temperature. In this manner, energy can be saved without sacrificing the quality of the cooking or baking results.

Beneficially, according to a further development of the method according to the present invention, the food load can automatically be determined or be entered by a user, thus providing optimum flexibility in operation and also a simple way of manufacturing and construction.

Advantageously, according to a further development of an embodiment of the method according to the present invention, the number of plural heating elements comprises two, as two heating elements in most cases are sufficient and can be controlled in a technical efficient manner, while at the same time saving energy and cost.

Beneficially, according to a further development of an embodiment of the method according to the present invention, the predetermined food preparation temperature is substantially the same as the heat-up temperature within a certain range, beneficially in +/- 5°C or +/- 2°C, or being identical. In this manner, an efficient energy consumption can be combined with a simple technique for control and the provision of optimum cooking or baking results.

Advantageously, according to a further development of an embodiment of the method according to the present invention, a two-stage power control can be applied by in a first stage switching the number of heating elements according to the power required for heating the food; and in a second stage controlling the number of activated heating elements by a multi-cycle power control. Beneficially, this control is done by an oscillating relay whose opening- respectively closing time corresponds to the duty cycle desired depending on the circuitry being used.

Advantageously, according to a further embodiment of the method according to the present invention, a temperature control element is beneficially arranged in series to plural heating elements in order to provide an optimum circuit design with a minimum number of parts and efficient operation.

Favorably, according to a further development of an embodiment of the method according to the present invention, a lower mass is associated to a lower duty cycle. In this manner, it is taken into account that a lower mass requires less energy to be heated while at the same time also requires less intermittent exposure to heat in order to maintain a certain temperature, which is adapted by the multi-cycle power control operating at a lower duty cycle once a lower load is present inside of the oven.

Beneficially, according to a further development of an embodiment of the method according to the present invention, the corresponding duty cycle is determined by a temperature-over-time behavior of the oven temperature. In this manner, without requiring additional installations, as a clock and a temperature sensor are mostly available in present kitchen ovens, a load can be determined to be heated inside of the oven, because a higher mass of food, representing a higher load, will lead to a higher heat-up delay of the oven, a fact that can be exploited to adjust the multi-cycle power control appropriately to the mass to be heated.

Advantageously, according to an embodiment of the household appliance according to the present invention, this comprises a temperature control arrangement according to the present invention, because such a temperature control arrangement optimally controls the power use of a household appliance, respectively a kitchen oven, in such a manner that it only uses the minimum amount of power needed and required to appropriately heat the food inside the oven.

Beneficially, according to an embodiment of the method for controlling a household appliance according to the present invention, this comprises the method for the electrical heating of food according to the present invention. This method is optimally suitable for the electrical heating of food making use a multi-cycle power control, which duty cycle is adapted to the load inside of the oven. Thus, an optimum power efficiency is guaranteed by such a method.

Subsequently, the invention will further be explained on the basis of embodiments and examples shown in drawings, wherein:
- Fig. 1: shows a basic configuration of an embodiment of a temperature control arrangement;
- Fig. 2: shows an embodiment of an oven;
- Fig. 3: shows an embodiment of a method for the electrical heating of food;
- Fig. 4: shows an example for a temperature-over-time behavior of an oven; and
- Fig. 5 to 7: show different temperature-over-time behaviors.
- Fig. 8: shows a basic configuration of another embodiment of a temperature control arrangement;

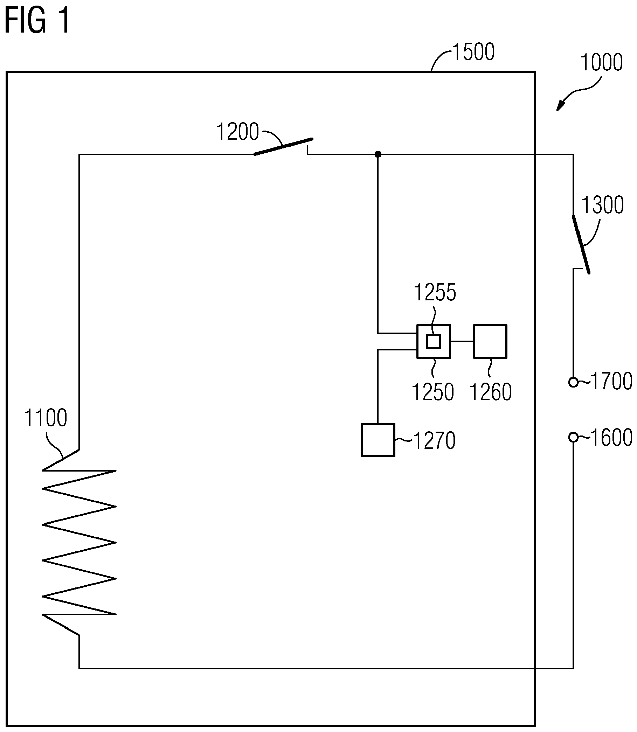

As Fig. 1 shows an example which is not covered by the invention, a basic temperature control arrangement may comprise parts in the kitchen oven 1500 such as a heating element 1100, which may be comprised of an upper heating element and a lower heating element; and may also be constructed as a circular heating element established with a fan to distribute the heat in the oven. As further can be seen a power supply 1700 and 1600 of the arrangement 1000 is present.

The drawing further shows a duty cycle power control 1200 and a thermostatic temperature control 1300 which are connected in series to each other and to the heating element 1100 and to the power supply 1700, 1600. Further, a duty cycle adjuster 1250 is shown that is coupled to the duty cycle power control 1200 and is further connected to a thermometer 1260 and to a timer 1270. The duty cycle adjuster 1250 also comprises a load evaluation unit 1255. The load evaluation unit is adapted to generate a control power value for the duty cycle power control on the basis of a thermal inertia that is determined with the thermometer and the timer measuring the heat-up time of the oven under certain frame parameters. It may comprise a table that is stored in a memory which stores certain frame parameters for an empty oven and the heat-up time for these frame parameters.

Further, it may comprise reference data in a memory for certain loads, e.g. 1 kg, 1 pound, 2 kg and so forth, and the associated heat-up time corresponding to a certain heat-up temperature. The frame parameters may be selected to conform to certain suitable cooking temperatures.

Generally, beneficially, the heating should be started at basically room temperature. The heat-up time in comparison to the heat-up time of an empty oven leads to a certain delay until a certain frame parameter temperature is reached which corresponds to the load that is present in form of a food to be heated in the oven. As such, e.g. the inclination angle of a temperature-over-time linear slope is indicative of the load present in the oven, e.g. in ovens present on the market, e.g. a heating capacity of 3 kW is present in form of electric heating elements in the oven. As such, if the load in the oven corresponds to a mass of 3 kg of food, then it has been found by the applicant this should go along with a duty cycle of 100%. On the other hand, due to thermal losses in form of radiation and conduction and convection, it is expected that a duty cycle corresponding to 1.5 kg of food inside the oven is not 50%, but rather 70%, and the one of 1 kg more close to 45%.

Advantageously, during a heat-up phase, the switch of the e.g. thermostat 1300 is closed and the heater is directly connected to the power supply 1700, 1600. Later, once the heat-up temperature is reached, the duty cycle power control 1200 becomes active and controls the power supply to the heating element 1100 with a duty cycle corresponding to the load inside the oven as explained above.

Preferably the heat up temperature value may be e.g. a fixed value set as 180°C or e.g. as 160°C.

Further, e.g. the duty cycle power control 1200 may mimic a simple temperature control element that safeguards a certain temperature range, in particular a certain upper temperature, under operation of the duty cycle power control. Such a temperature control element may e.g. be behave like a capillary tube actuator that e.g. may serve as a controller that limits the upper temperature in order to prevent scorching of the food to be heated.
The temperature control element will e.g. only be activated once the heat-up switch 1300 has opened. Beneficially such a temperature control element maybe designed in hardware firmware or software.

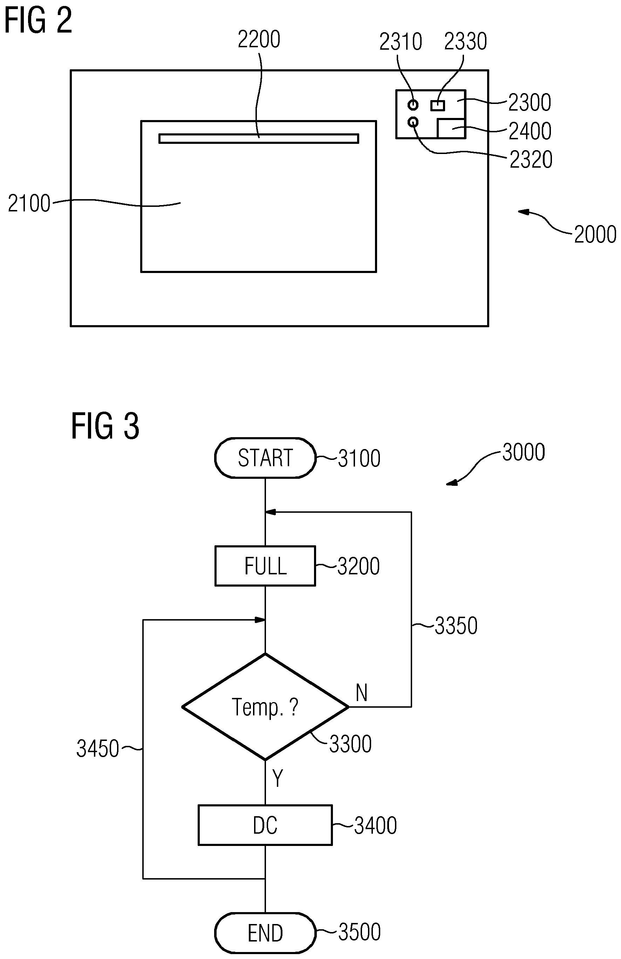

As Fig. 2 shows, a household appliance 2000 in the form of a kitchen oven comprises a door closing a cooking cavity 2100 with a handle 2200. Further, a control panel is shown that comprises mass input means 2310, 2320 and an indication 2330. Further, a controller may be provided 2400, which may contain the duty cycle power adjuster. By means of the control panel, the user may activate a cooking program and may input a food mass by means of input keys 2310 and 2320. An indication may be given 2330 as to which temperature is currently present, if a preheat process is run, and as to which mass is detected inside of the oven, or which duty cycle is run, e.g. 60%, giving the user an indication of how much power is saved with the household appliance.
The household appliance 2000 may contain a scale, not shown in the drawing. The scale may measure the weight of the food and provide the information to the load evaluation unit 1255. On the other hand, by means of a temperature sensor and a timer, the temperature-over-time behavior of the oven that is heated may be determined in order to determine a load that is present inside of the oven and adjust the duty cycle appropriately.
Beneficially, a load corresponding to 3 kg corresponds to a duty cycle of 100%, and a lower load corresponds to a lower duty cycle, e.g. a load of 1.5 kg does not correspond to a duty cycle of 50%, but rather to a duty cycle of 70% due to the non-linear behavior of the heater, thermal losses and thermal radiation and so forth.

Fig. 3 shows a method not covered by the invention. Starting at 3100, the oven is heated with full power 3200. At 3300, an inquiry is performed as to which temperature is reached, is the temperature at the heat-up temperature, then, in the yes case, the duty cycle power control is activated operating the heater with a duty cycle that corresponds to the load inside of the oven. It is branched back in front of the inquiry 3450, where within a loop the temperature is controlled. Once the temperature is not satisfying a temperature criterion that is questioned inside of the inquiry 3300 it is branched back after the start 3350; and full heating power is activated. This branching back can either be done by closing the thermostatic control 1300, or by instructing the duty cycle power adjuster by means of the temperature control element 1300 to heat at full duty cycle 100%, until the temperature has reached a predefined temperature again and the duty cycle power control 3400 can be adapted to further control the cooking process.

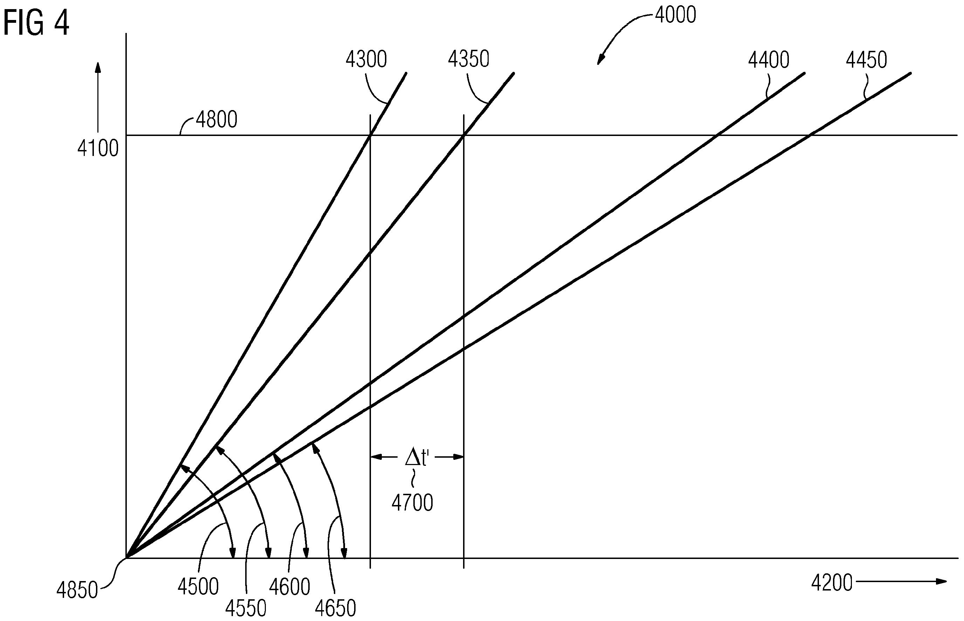

Fig. 4 shows an example of a temperature-over-time behavior. In this case, temperature-over-time linear slopes 4300, 4350, 4400 and 4450 are shown. The diagram 4000 shows a temperature 4100 over time 4200. Further, inclination angles 4500, 4550, 4600 and 4650 are shown. On the other hand, a time delay 4700 is also shown.

Beneficially, an empty oven is heated up, demonstrating a temperature-over-time behavior 4300 associated to an inclination angle 4500. In this case, frame parameters are the ambient temperature 4850 and the heat-up temperature 4800. On the other hand, any other temperatures as frame parameters can be used, e.g. such a temperature-over-time behavior may be stored inside the load evaluation unit 1255. At 4350, e.g. a temperature-over-time behavior corresponding to an inclination angle 4550 corresponding to a certain load in the oven is shown, e.g. this load may be 1 kg. This load is associated to an inclination angle 4550. In this case, this may correspond to a duty cycle of 60%. On the other hand, at 4400, a higher load, e.g. meaning a roast being in the oven, is heated which corresponds to an inclination angle of 4600 and a temperature-over-time behavior 4400.

Further, a time delay between an empty oven and a 1 kg load 4700 is also shown. As the inclination angle, this time delay is also indicative of the load and can be used to adjust the duty cycle power control. Under 4400, most probably the duty cycle will already be at 80% corresponding to a load of a food mass of 2 kg to 2.5 kg.

Further, at 4450, e.g. a food mass of 3 kg is heated that corresponds to an inclination angle of 4650. Such a food mass heated in a common kitchen oven having a heating power of 3 kW corresponds to e.g. a 100% duty cycle, as with such a high mass, the full heating power is needed to keep the mass at a predetermined cooking temperature. Experimental data can be acquired corresponding to various loads in the oven and to various frame parameters to build a table of food masses, loads, frame parameters /temperatures and inclination angles. Such a table can then be consulted during operation, to get for an associated inclination angle or a time delay at a certain stage of the cooking process a corresponding duty cycle value.

As can also be seen, the lower the inclination angle is, the higher the duty cycle is to be selected. Conventionally, thermal processes are non-linear, and as such the dependency of duty cycle and load inside the oven will be non-linear.

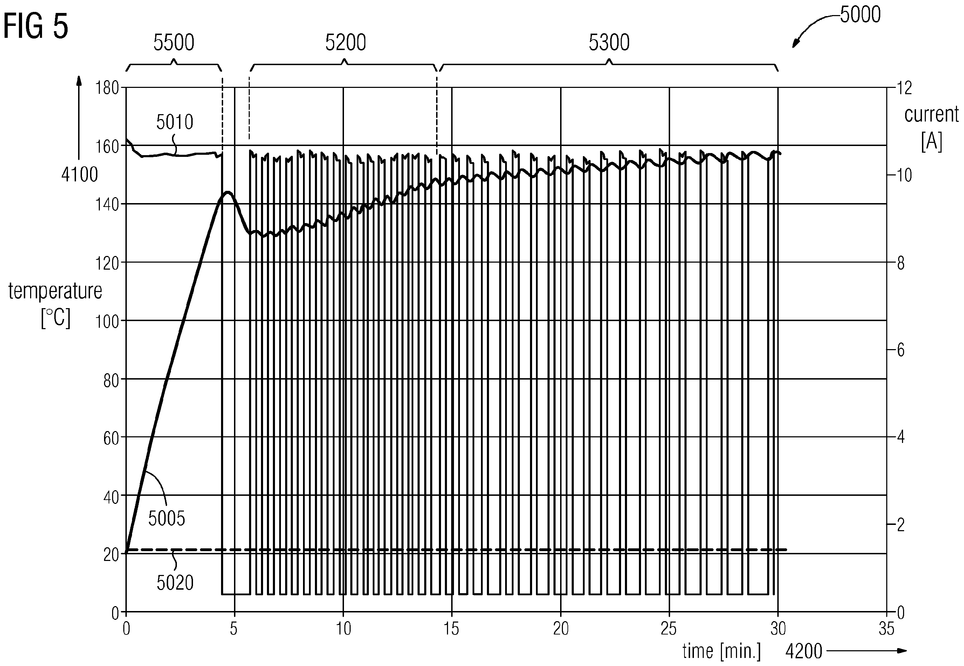

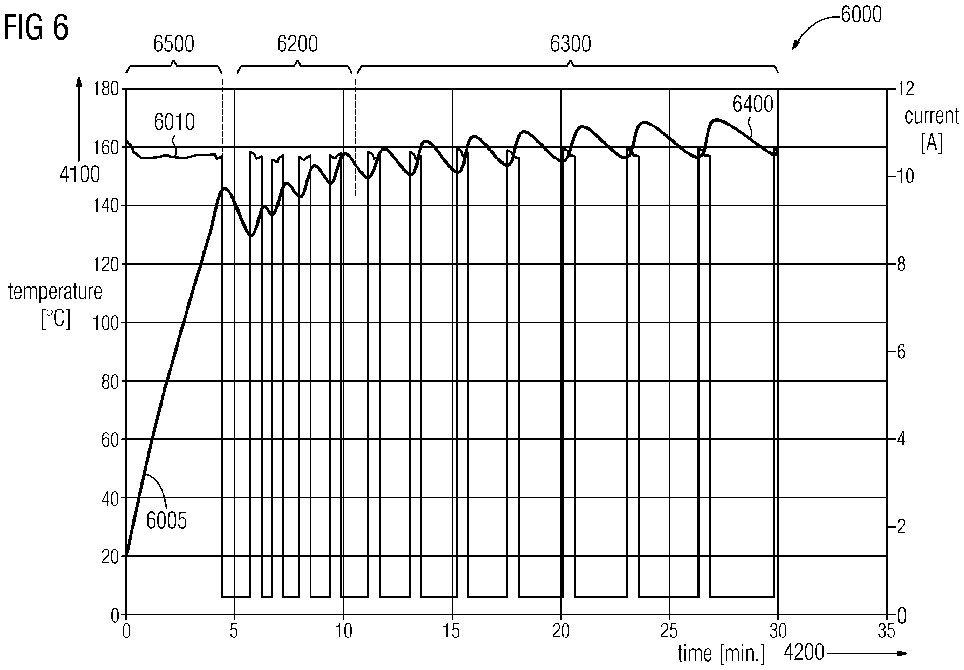

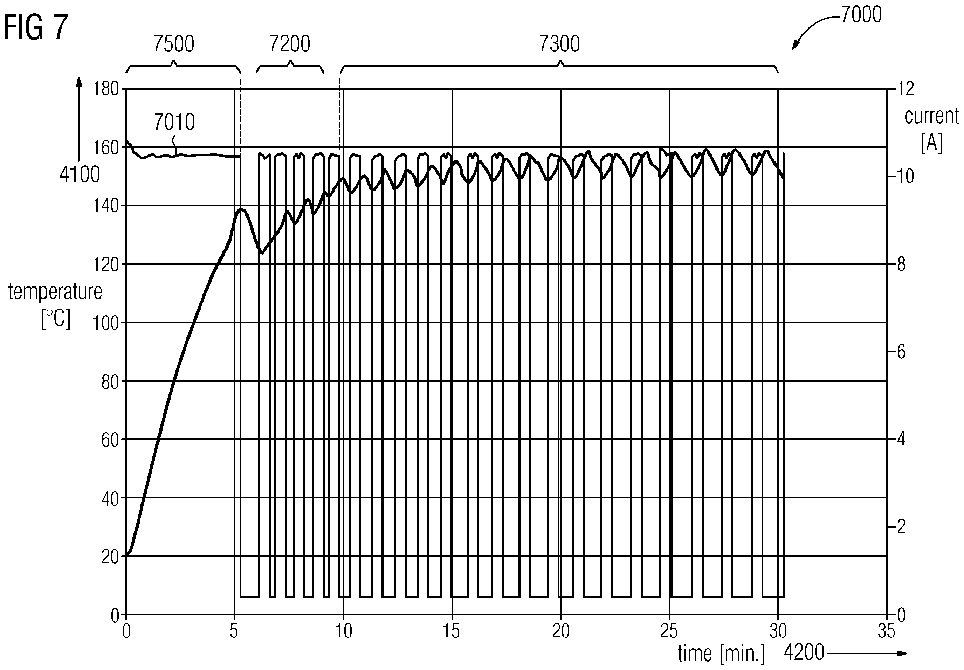

Fig. 5 to 7 show different temperature-over-time behaviors. Fig. 5 indicated by 5000 shows the operation of an oven under a small load. Fig. 6 indicated by reference 6000 shows an operation of the oven under a small load with higher heating power, and Fig. 7 indicated by 7000 shows the operation of an oven under a heavy load, such as for instance when a pork roast is prepared. The other cases referenced by 5000 and 6000 may be indicating the baking of cookies.

Reference 5020 is indicative of the room temperature. References 5005, respectively 6005, respectively 7005 indicate the electric current, whereas the intervals 5200, respectively 6200, respectively 7200 indicate an initial heat-up phase following the reaching of the set temperature, and the intervals 5300, 6300 and 7300 are indicative of a cooking phase where the temperature is maintained.

Further, heat-up times 5500, 6500 and 7500 are shown. The heat-up times are indicative of a speed of heat-up in the oven in the presence of different loads. Those times can serve to determine the load itself, as the further conditions of the oven like temperature behavior can be determined without the load and then compared with the behavior under a load.

It is shown that in the presence of a small load, the heat-up goes speedier 5300 than in the presence of a high load indicated by 7500.

When comparing the two diagrams in Fig. 5 and 6, where at 5000 a smaller heating power is used and at 6000 a higher heating power is used, it can be determined that the duty cycle under higher power is much smaller than under lower power. This can also be optically determined in that in the intervals 5200 and 5300 more "power on" phases are shown than in the intervals 6200 and 6400.

On the other hand, it can be also determined from the representation in Fig. 6 that higher power leads to higher temperature overshooting, which is depicted by the peaks in Fig. 6. One of them, as an example, is referenced by 6400.

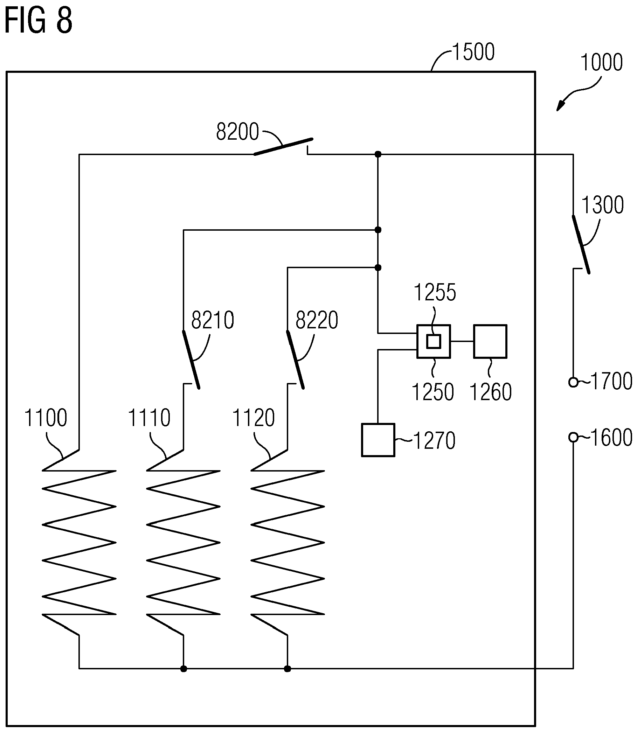

As Fig. 8 shows a basic configuration of a temperature control arrangement for plural heating elements. In this case, the plural heating elements are controlled with a multi-cycle power control 8200, 8210 and 8220. The plural heating elements are identified by 1100, 1110 and 1120.

In an advantageous manner, in dependency of a food load that is either automatically determined or input by a user, the number of heating elements can be switched according to the power required for heating the food to a predetermined food preparation temperature and maintaining this temperature. In this manner, it is not always required to switch on all of the heating elements.

In a beneficial manner, heating elements that are activated can be controlled by the multi-cycle power control 8200, 8210 and 8220. Such a multi-cycle power control may, for instance, operate a relay that switches the heating elements on for a certain amount of time depending on the power required to maintain the food preparation temperature. Beneficially, the e.g. individually activated heating elements 1100, 1110 and 1120 can be individually operated at a different duty cycle as required to maintain a proper food preparation temperature.

Other than providing plural heating elements and a multi-cycle power control, the operation of the embodiment shown in Fig. 8 is much similar to the operation of the embodiment shown in Fig. 1.

Initially, for instance, the user sets a food load and sets a food preparation temperature. In some cases, it may be desirable to switch on all heating elements to arrive at the heat-up temperature as fast as possible. Then, however, depending on the food load that is either determined automatically or e.g. set by the user, an optimum number of heating elements may be kept activated and operated by the multi-cycle power control 8200, 8210 and 8220 in order to provide optimum cooking respectively baking results, while at the same time saving energy and securing an efficient operation of the heating arrangement.

**List of reference numerals**

| | |
|---|---|
| 1000 | temperature control arrangement |
| 1600, 1700 | power supply |
| 1500 | oven cavity |
| 1100,1110,1120 | heating element |
| 1200 | duty cycle power control |
| 8200,8210,8220 | multi cycle power control |
| 1300 | thermostatic control |
| 1260 | thermometer |
| 1270 | timer |
| 1255 | load evaluation unit |
| 1250 | duty cycle adjuster |
| | |
| 2000 | kitchen oven |
| 2100 | cooking cavity |
| 2200 | handle |
| 2300 | control panel |
| 2400 | controller |
| 2330 | indication |
| 2310, 2320 | input keys |
| | |
| 3000 | method |
| 3100 | start |
| 3200 | full heating power |
| 3300 | temperature inquiry |
| 3400 | duty cycle power control |
| 3500 | end |
| 3450, 3350 | branching back |
| | |
| 4000 | Temperature-over-time behavior diagram |
| 4100 | temperature |
| 4200 | time |
| 4800, 4850 | temperatures |
| 4300, 4350, 4400, 4450 | |
| | different temperature-over-time behaviors in form of linear slopes |
| 4700 | time delay |
| 4500, 4550, | |
| 4650, 4600 | different inclination angles corresponding to the temperature-over-time behavior |
| 5000, 6000, 7000 | temperature-over-time diagrams under different loads/power conditions |
| 5010, 6010, 7010 | heat-up power |
| 5005, 6005, 7005 | electric current |
| 5500, 6500, 7500 | heat-up period |
| 5200, 6200, 7200 | first raise of high-duty cycle |
| 5300, 6300, 7300 | second phase of temperature maintenance with lower duty cycle |
| 6400 | peak temperature |

## Claims

1. A temperature control arrangement (1000) for electric heating of food in a cavity (1500) of a domestic appliance, at least comprising:
- a plurality of electric heating elements (1100,1110, 1120);
- a multi-cycle power control (8200) for said plurality of electric heating elements (1100,1110, 1120),
- a temperature control element (1300);
- an automatic food load evaluation unit (1255), **characterized in that**:
- the temperature control element (1300) and the multi-cycle power control (8200, 8210, 8220) are connected in series to each other, and in series with respectively the plurality of electric heating elements (1100, 1110, 1120); and
- the respective automatic food load evaluation unit (1255) is connected to the multi-cycle power control (8200, 8210, 8220);and
- the multi cycle power control (8200, 8210, 8220) is adapted to output power according to a control power value supplied from the load evaluation unit (1255).

2. The temperature control arrangement (1000) according to claim 1, wherein load evaluation unit (1255) comprises mass input means (2320) for the food mass to be heated.

3. The temperature control arrangement (1000) according to claim 2, wherein the mass input means (2320) comprises a scale.

4. The temperature control arrangement (1000) according to claim 2, wherein the load evaluation unit (1255) comprises means for evaluating a thermal inertia of the food to be heated.

5. The temperature control arrangement (1000) according to claim 4, wherein the load evaluation unit (1255) is adapted to provide a control power value in dependency of the food mass/ thermal inertia of the food.

6. The temperature control arrangement (1000) according to claim 5, wherein the load evaluation unit is adapted to provide a control power value corresponding the food mass/ thermal inertia of the food to be heated.

7. The temperature control arrangement (1000) according to claim 6, further comprising a thermometer (1260) and a timer (1270) adapted to determine a temperature over time behavior.

8. The temperature control arrangement (1000) according to claim 7, wherein the load evaluation unit is adapted to determine an inclination angle (4550) of a temperature over time linear slope.

9. The temperature control arrangement (1000) according to claim 7, wherein the load evaluation unit is adapted to provide a lower control power value for a larger inclination angle.

10. The temperature control arrangement (1000) according to claim 9, wherein the inclination angle of a linear slope corresponding to a mass of 3 kg corresponds to a power value for a 100 % duty cycle.

11. A method (3000) for the electrical heating of food in a domestic appliance employing the temperature control arrangement of any of the claims 1-10, at least comprising:
- heating up the food inside a cavity of the domestic appliance at a full heating capacity (3200) of a plurality of heating elements (1100, 1110, 1120) until a predetermined heat-up temperature of the cavity is reached;
- determining a food load of said food using the food load evaluation unit (1255);
- switching (3400) to a multi-cycle power control (8200, 8210, 8220) for said plurality of heating elements (1100, 1110, 1120) to maintain a predetermined food preparation temperature (3300) of the cavity,
- wherein
a predetermined number of said plurality of heating elements (1100, 1110, 1120) that corresponds to said determined food load is activated by said multi-cycle power control (8200, 8210, 8220) and a duty cycle of said activated number of heating elements (1100,1110, 1120) is adjusted according to said determined food load by said multi-cycle power control (8200, 8210, 8220);
- controlling said predetermined food preparation temperature (3300) of the cavity (1500) with a temperature control element (1300),

12. Method (3000) according to claim 11, wherein
- the food load can be automatically determined during the heating up by determining and evaluating the time course of the temperature increase of at least one of the cavity (1500) and the food.

13. Method (3000) according to any of the claims 11 to 12,
wherein the plurality of heating elements (1100, 1110, 1120) comprises at least two.

14. Method (3000) according to any of the claims 11 to 13,
wherein
- the predetermined food preparation temperature is in the same range as said predetermined heat-up temperature; preferably plus- / minus 5°C, more preferably plus- / minus 2°C, most preferably the same;
- either of the heat-up temperature and the food preparation temperature, preferably both, can be set by the user

15. Method (3000) according to any of the claims 11 to 14, wherein said multi-cycle power control (8200, 8210, 8220) controls a predetermined average power of said activated number of heating elements (1100, 1110, 1120) that corresponds to said determined food load,
preferably wherein said activated number of heating elements (1100, 1110, 1120) are arranged in parallel to each other and in series to the multi-cycle power control (8200, 8210, 8220)

16. Method (3000) according to any of the claims 11 to 15, wherein the temperature control element (1300) is arranged in series to said plurality of heating elements (1100, 1110, 1120.

17. Method (3000) according to any of the claims 11 to 16, wherein a lower mass is associated to a lower duty cycle.

18. Method (3000) according to any of the claims 11 to 17, wherein the duty cycle is determined from a temperature-over-time behavior (1250, 1260, 1270).

19. A household appliance (2000), especially a kitchen oven, comprising a temperature control arrangement (1000) according to any one of the claims 1 to 10.

20. A method for controlling a household appliance (2000) comprising a method for electrical heating of food (3000) according to any one of the claims 11 to 18.

## Patentansprüche

1. Temperatursteueranordnung (1000) zum elektrischen Erhitzen eines Nahrungsmittels in einem Hohlraum (1500) eines Haushaltsgeräts, das mindestens umfasst:
- eine Vielzahl elektrischer Heizelemente (1100, 1110, 1120);
- eine Mehrfachzyklen-Leistungsteuerung (8200) für die Vielzahl der elektrischen Heizelemente (1100, 1110, 1120),
- ein Temperatursteuerelement (1300);
- eine automatische Auswerteinheit (1255) für die Nahrungsmittelbeladung,
**dadurch gekennzeichnet, dass**
- das Temperatursteuerelement (1300) und die Mehrfachzyklen-Leistungssteuerung (8200, 8210, 8220) miteinander in Reihe geschaltet sind und mit jeweils der Vielzahl der elektrischen Heizelemente (1100, 1110, 1120) in Reihe geschaltet sind; und
- die jeweilige automatische Auswerteinheit (1255) für die Nahrungsmittelbeladung mit der Mehrfachzyklen-Leistungssteuerung (8200, 8210, 8220) verbunden ist; und
- die Mehrfachzyklen-Leistungssteuerung (8200, 8210, 8220) geeignet ist, um Leistung gemäß einem Steuerleistungswert auszugeben, der von der Beladungsauswerteinheit (1255) zugeführt wird.

2. Temperatursteueranordnung (1000) nach Anspruch 1, wobei die Beladungsauswerteinheit (1255) Masseneingabemittel (2320) für die zu erhitzende Nahrungsmittelmasse umfasst.

3. Temperatursteueranordnung (1000) nach Anspruch 2, wobei das Masseneingabemittel (2320) eine Waage umfasst.

4. Temperatursteueranordnung (1000) nach Anspruch 2, wobei die Beladungsauswerteinheit (1255) Mittel zum Auswerten einer Wärmeträgheit des aufzuwärmenden Nahrungsmittels umfasst.

5. Temperatursteueranordnung (1000) nach Anspruch 4, wobei die Beladungsauswerteinheit (1255) geeignet ist, in Abhängigkeit von der Nahrungsmittelmasse/Wärmeträgheit des Nahrungsmittels einen Steuerleistungswert bereitzustellen.

6. Temperatursteueranordnung (1000) nach Anspruch 5, wobei die Beladungsauswerteinheit geeignet ist, entsprechend der Nahrungsmittelmasse/Wärmeträgheit des zu erhitzenden Nahrungsmittels einen Steuerleistungswert bereitzustellen.

7. Temperatursteueranordnung (1000) nach Anspruch 6, ferner umfassend ein Thermometer (1260) und einen Zeitgeber (1270), die geeignet sind, ein Verhalten der Temperatur im Zeitverlauf zu bestimmen.

8. Temperatursteueranordnung (1000) nach Anspruch 7, wobei die Beladungsauswerteinheit geeignet ist, um einen Neigungswinkel (4550) einer linearen Steigung einer Temperatur im Zeitverlauf zu bestimmen.

9. Temperatursteueranordnung (1000) nach Anspruch 7, wobei die Beladungsauswerteinheit geeignet ist, für einen größeren Neigungswinkel einen niedrigeren Steuerleistungswert bereitzustellen.

10. Temperatursteueranordnung (1000) nach Anspruch 9, wobei der Neigungswinkel einer linearen Steigung, der einer Masse von 3 kg entspricht, einem Leistungswert für einen Arbeitszyklus von 100 % entspricht.

11. Verfahren (3000) zum elektrischen Aufwärmen von Nahrungsmittel in einem Haushaltsgerät, das die Temperatursteueranordnung nach einem der Ansprüche 1 bis 10 verwendet, und mindestens umfasst:
- Aufwärmen des Nahrungsmittel in einem Hohlraum des Haushaltsgeräts mit einer vollen Heizkapazität (3200) einer Vielzahl von Heizelementen (1100, 1110, 1120), bis eine vorbestimmte Aufheiztemperatur des Hohlraums erreicht ist;
- Bestimmen einer Nahrungsmittelbeladung des Nahrungsmittels unter Verwendung der Auswerteinheit (1255) für die Nahrungsmittelbeladung;
- Umschalten (3400) auf eine Mehrfachzyklen-Leistungssteuerung (8200, 8210, 8220) für die Vielzahl der Heizelemente (1100, 1110, 1120), um eine vorbestimmte Nahrungsmittelzubereitungstemperatur (3300) des Hohlraums aufrecht zu erhalten,
- wobei eine vorbestimmte Anzahl der Vielzahl der Heizelemente (1100, 1110, 1120), die der vorbestimmten Nahrungsmittelbeladung entspricht, durch die Mehrfachzyklen-Leistungssteuerung (8200, 8210, 8220) aktiviert wird und ein Arbeitszyklus der aktivierten Anzahl der Heizelemente (1100, 1110, 1120) gemäß der bestimmten Nahrungsmittelbeladung durch die Mehrfachzyklen-Leistungssteuerung (8200, 8210, 8220) angepasst wird;
- Steuern der vorbestimmten Nahrungsmittelzubereitungstemperatur (3300) des Hohlraums (1500) mit einem Temperatursteuerelement (1300).

12. Verfahren (3000) nach Anspruch 11, wobei
- die Nahrungsmittelbeladung automatisch während des Aufheizens bestimmt werden kann, indem der Zeitverlauf des Temperaturanstiegs von mindestens einem von dem Hohlraum (1500) und dem Nahrungsmittel bestimmt und ausgewertet wird.

13. Verfahren (3000) nach einem der Ansprüche 11 bis 12, wobei die Vielzahl der Heizelemente (1100, 1110, 1120) mindestens zwei umfasst.

14. Verfahren (3000) nach einem der Ansprüche 11 bis 13, wobei
- die vorbestimmte Nahrungsmittelzubereitungstemperatur in demselben Bereich wie die vorbestimmte Aufheiztemperatur liegt, vorzugsweise plus/ minus 5 °C, weiter bevorzugt plus/minus 2 °C, am meisten bevorzugt dieselbe Temperatur;
- wobei entweder die Aufheiztemperatur oder die Nahrungsmittelzubereitungstemperatur, vorzugsweise beide, von dem Anwender festgelegt werden können.

15. Verfahren (3000) nach einem der Ansprüche 11 bis 14, wobei die Mehrfachzyklen-Leistungssteuerung (8200, 8210, 8220) eine vorbestimmte Durchschnittsleistung der aktivierten Anzahl der Heizelemente (1100, 1110, 1120) steuert, die der bestimmten Nahrungsmittelbeladung entspricht,
wobei die aktivierte Anzahl der Heizelemente (1100, 1110, 1120) vorzugsweise parallel zueinander und in Reihe zu der Mehrfachzyklen-Leistungssteuerung (8200, 8210, 8220) angeordnet ist.

16. Verfahren (3000) nach einem der Ansprüche 11 bis 15, wobei das Temperatursteuerelement (1300) in Reihe zu der Vielzahl der Heizelemente (1100, 1110, 1120) angeordnet ist.

17. Verfahren (3000) nach einem der Ansprüche 11 bis 16, wobei einem niedrigeren Arbeitszyklus eine niedrigere Masse zugeordnet ist.

18. Verfahren (3000) nach einem der Ansprüche 11 bis 17, wobei der Arbeitszyklus aus einem Verhalten der Temperatur im Zeitverlauf (1250, 1260, 1270) bestimmt wird.

19. Haushaltsgerät (2000), insbesondere ein Küchenofen, umfassend eine Temperatursteueranordnung (1000) gemäß einem der Ansprüche 1 bis 10.

20. Verfahren zum Steuern eines Haushaltsgeräts (2000), umfassend ein Verfahren zum elektrischen Aufwärmen von Nahrungsmittel (3000) gemäß einem der Ansprüche 11 bis 18.

## Revendications

1. Agencement de régulation de température (1000) pour le chauffage électrique de nourriture dans une cavité (1500) d'un appareil ménager, comprenant au moins :
- une pluralité d'éléments chauffants électriques (1100, 1110, 1120) ;
- une commande de puissance par trains d'alternances (8200) pour ladite pluralité d'éléments chauffants électriques (1100, 1110, 1120) ;
- un élément de régulation de température (1300) ;
- une unité d'évaluation de charge de nourriture automatique (1255),
**caractérisé en ce que** :
- l'élément de régulation de température (1300) et la commande de puissance par trains d'alternances (8200, 8210, 8220) sont reliés en série l'un à l'autre, et en série avec respectivement la pluralité d'éléments chauffants électriques (1100, 1110, 1120) ; et
- l'unité d'évaluation de charge de nourriture automatique respective (1255) est reliée à la commande de puissance par trains d'alternances (8200, 8210, 8220) ; et
- la commande de puissance par trains d'alternances (8200, 8210, 8220) est adaptée pour délivrer une puissance en fonction d'une valeur de puissance de commande fournie par l'unité d'évaluation de charge (1255).

2. Agencement de régulation de température (1000) selon la revendication 1, dans lequel l'unité d'évaluation de charge (1255) comprend un moyen d'entrée de masse (2320) pour la masse de nourriture à chauffer.

3. Agencement de régulation de température (1000) selon la revendication 2, dans lequel le moyen d'entrée de masse (2320) comprend une balance.

4. Agencement de régulation de température (1000) selon la revendication 2, dans lequel l'unité d'évaluation de charge (1255) comprend un moyen pour évaluer une inertie thermique de la nourriture à chauffer.

5. Agencement de régulation de température (1000) selon la revendication 4, dans lequel l'unité d'évaluation de charge (1255) est adaptée pour fournir une valeur de puissance de commande en fonction de la masse de nourriture/l'inertie thermique de la nourriture.

6. Agencement de régulation de température (1000) selon la revendication 5, dans lequel l'unité d'évaluation de charge est adaptée pour fournir une valeur de puissance de commande correspondant à la masse de nourriture/ l'inertie thermique de la nourriture à chauffer.

7. Agencement de régulation de température (1000) selon la revendication 6, comprenant en outre un thermomètre (1260) et une minuterie (1270) adaptés pour déterminer un comportement de la température dans le temps.

8. Agencement de régulation de température (1000) selon la revendication 7, dans lequel l'unité d'évaluation de charge est adaptée pour déterminer un angle d'inclinaison (4550) d'une pente linéaire de la température en fonction du temps.

9. Agencement de régulation de température (1000) selon la revendication 7, dans lequel l'unité d'évaluation de charge est adaptée pour fournir une valeur de puissance de commande inférieure pour un angle d'inclinaison supérieur.

10. Agencement de régulation de température (1000) selon la revendication 9, dans lequel l'angle d'inclinaison d'une pente linéaire correspondant à une masse de 3 kg correspond à une valeur de puissance pour un facteur d'utilisation de 100 %.

11. Procédé (3000) de chauffage électrique de nourriture dans un appareil ménager employant l'agencement de régulation de température de l'une quelconque des revendications 1 à 10, comprenant au moins les étapes suivantes :
- chauffer la nourriture à l'intérieur d'une cavité de l'appareil ménager à une pleine capacité de chauffage (3200) d'une pluralité d'éléments chauffants (1100, 1110, 1120) jusqu'à ce qu'une température de chauffage prédéterminée de la cavité soit atteinte ;
- déterminer une charge de nourriture de ladite nourriture en utilisant l'unité d'évaluation de charge de nourriture (1255) ;
- passer (3400) à une commande de puissance par trains d'alternances (8200, 8210, 8220) pour ladite pluralité d'éléments chauffants (1100, 1110, 1120) pour maintenir une température de préparation de nourriture prédéterminée (3300) de la cavité,
- un nombre prédéterminé de ladite pluralité d'éléments chauffants (1100, 1110, 1120) qui correspond à ladite charge de nourriture déterminée étant activé par ladite commande de puissance par trains d'alternances (8200, 8210, 8220) et un facteur d'utilisation dudit nombre activé d'éléments chauffants (1100, 1110, 1120) étant ajusté en fonction de ladite charge de nourriture déterminée par ladite commande de puissance par trains d'alternances (8200, 8210, 8220) ;
- réguler ladite température de préparation de nourriture prédéterminée (3300) de la cavité (1500) avec un élément de régulation de température (1300).

12. Procédé (3000) selon la revendication 11, dans lequel
- la charge de nourriture peut être déterminée automatiquement pendant le chauffage en déterminant et en évaluant le décours temporel de l'augmentation de température de la cavité (1500) et/ou de la nourriture.

13. Procédé (3000) selon l'une quelconque des revendications 11 à 12, dans lequel la pluralité d'éléments chauffants (1100, 1110, 1120) en comprend au moins deux.

14. Procédé (3000) selon l'une quelconque des revendications 11 à 13, dans lequel
- la température de préparation de nourriture prédéterminée se situe dans la même gamme que ladite température de chauffage prédéterminée ; de préférence plus/moins 5 °C, mieux plus/moins 2 °C, idéalement identique ;
- l'une ou l'autre de la température de chauffage et de la température de préparation de nourriture, de préférence les deux, peuvent être réglées par l'utilisateur.

15. Procédé (3000) selon l'une quelconque des revendications 11 à 14, dans lequel ladite commande de puissance par trains d'alternances (8200, 8210, 8220) commande une puissance moyenne prédéterminée dudit nombre activé d'éléments chauffants (1100, 1110, 1120) qui correspond à ladite charge de nourriture déterminée,
de préférence dans lequel les éléments dudit nombre activé d'éléments chauffants (1100, 1110, 1120) sont agencés parallèlement les uns aux autres et en série avec la commande de puissance par trains d'alternances (8200, 8210, 8220).

16. Procédé (3000) selon l'une quelconque des revendications 11 à 15, dans lequel l'élément de régulation de température (1300) est agencé en série avec ladite pluralité d'éléments chauffants (1100, 1110, 1120).

17. Procédé (3000) selon l'une quelconque des revendications 11 à 16, dans lequel une masse inférieure est associée à un facteur d'utilisation inférieur.

18. Procédé (3000) selon l'une quelconque des revendications 11 à 17, dans lequel le facteur d'utilisation est déterminé à partir d'un comportement de la température dans le temps (1250, 1260, 1270).

19. Appareil ménager (2000), en particulier un four de cuisine, comprenant un agencement de régulation de température (1000) selon l'une quelconque des revendications 1 à 10.

20. Procédé de commande d'un appareil ménager (2000) comprenant un procédé de chauffage électrique de nourriture (3000) selon l'une quelconque des revendications 11 à 18.
